# EUROPÄISCHE PATENTSCHRIFT

(11) **EP 2 896 870 B1**
(45) Veröffentlichungstag und Bekanntmachung des Hinweises auf die Patenterteilung: **17.03.2021**
(21) Anmeldenummer: 14151735.9
(22) Anmeldetag: 20.01.2014
(51) Int. Cl.: F17C 5/00

(54) **Verfahren und Vorrichtung zum automatischen seriellen Befüllen von Druckflaschen mit Gas**
Method and device for automatic serial filling of pressure bottles with gas
Procédé et dispositif de remplissage automatique en série de bouteilles sous pression avec du gaz

(43) Veröffentlichungstag der Anmeldung: 22.07.2015
(73) Patentinhaber: Air Liquide Deutschland GmbH, 40235 Düsseldorf (DE); L'AIR LIQUIDE, Société Anonyme pour l'Etude et l'Exploitation des Procédés Georges Claude, 75007 Paris (FR)
(72) Erfinder: Pongraz, Johann, 47259 Duisburg (DE)
(74) Vertreter: Keenway Patentanwälte Neumann Heine Taruttis

(56) Entgegenhaltungen:
- EP-A1- 1 813 853
- EP-A2- 1 246 141
- EP-A2- 1 371 895
- DE-A1- 2 129 548
- DE-A1- 19 718 645
- FR-A1- 2 682 080
- US-A- 4 567 923

## Beschreibung

Die vorliegende Erfindung betrifft ein Verfahren und eine Vorrichtung zum seriellen Befüllen einer Vielzahl von Druckflaschen mit einem Gas, wobei es insbesondere um relativ kleine Flaschen mit 2 bis 20 1 (Liter) Inhalt und für Drücke von 100 bis 400 bar geht, insbesondere um Gasflaschen mit 5 1 Inhalt bis 200 bar Innendruck und mit 11 1 Inhalt und 300 bar Innendruck für die Gase Sauerstoff, Stickstoff, Helium, Argon und Mischungen von Argon, die zum Schweißen genutzt werden (sogenanntes "Argon-Mix").

Die Erfindung ist anwendbar für Druckflaschen, die eine geometrische Längsachse und einen dazu zentrierten Füllstutzen am Kopf aufweisen. Insbesondere sind solche Produkte unter dem Handelsnamen "ALbee" in der Literatur bekannt, wobei solche Druckflaschen bevorzugt einen Sicherheitskopf mit Bedien- und Anschlusselementen für den Benutzer in einem Sicherheitskäfig, der gleichzeitig als Handgriff dienen kann, aufweisen.

Das Befüllen von entleerten Druckflaschen findet nach dem Stand der Technik an unterschiedlich konstruierten Füllstationen statt. Da es hierbei um einen massenweise auftretenden Vorgang geht, gibt es seit langem Bestrebungen zur Automatisierung, jedoch sind bei der Vorbereitung und Durchführung des Füllvorgangs bisher aus verschiedenen Gründen relativ viele manuelle Eingriffe erforderlich. Im Allgemeinen wird der eigentliche Füllvorgang bei aufrecht stehenden Flaschen durchgeführt, einerseits weil so Füllstutzen und andere Bedienelemente der Druckflaschen für manuelle Eingriffe leicht erreichbar sind und andererseits weil dann auf relativ kleinem Raum viele Druckflaschen gleichzeitig in einem Füllstand untergebracht werden können, meist in sogenannten Paletten angeordnet.

Für große und schwere Druckflaschen ist es üblich, einen Füllkopf zum Füllstutzen zu führen, was in den meisten Fällen von Hand durchgeführt wird.

Aus Sicherheitsgründen und zur Automatisierung sind Druckflaschen auch typischerweise mit maschinelesbaren Codierungen versehen, bspw. Bar-Codes, um das Befüllen mit dem richtigen Gas und dem richtigen Druck überprüfen und sicherstellen zu können. Auch hierzu gibt es im Stand der Technik zahlreiche Vorschläge.

Auch der Aufbau von typischen Füllständen mit Vorratsbehältern verschiedener Gase mit Evakuierungs- und Entlüftungsvorrichtungen sowie Einrichtungen für Spülvorgänge sind zahlreich bekannt, ebenso die Verwendung von Füllköpfen mit Adaptern oder Verstellmöglichkeiten für unterschiedliche Füllstutzen.

Aus der DE 197 18 645 A1 sind auch bereits ein Verfahren und eine Vorrichtung zum Befüllen von Druckflaschen bekannt, bei denen eine weitgehende Automatisierung verwirklicht ist, insbesondere beim eigentlichen Füllvorgang, indem Druckflaschen auf einem Transportband transportiert und dann vertikal angehoben und mit ihrem Füllstutzen gegen einen Füllkopf gedrückt werden. Auch bei diesem System wird allerdings der Füllvorgang jeweils bei aufrecht stehenden Druckflaschen durchgeführt.

Ausgehend von dem genannten Stand der Technik liegt der vorliegenden Erfindung die Aufgabe zugrunde, das massenhafte Befüllen von relativ kleinen Druckflaschen bis zu 20 1 Volumen zu vereinfachen und zu verbessern und wesentliche Schritte dabei zu automatisieren, wobei gleichzeitig die Genauigkeit des Füllvorgangs bezüglich Füllmenge und ggf. Zusammensetzung verbessert werden soll.

Zur Lösung dieser Aufgaben dienen ein Verfahren nach dem Anspruch 1 und eine Vorrichtung nach dem Anspruch 7. Vorteilhafte Ausgestaltungen, die einzeln oder in technisch sinnvollen Kombinationen miteinander zur Anwendung kommen können, sind in den jeweils abhängigen Ansprüchen angegeben.

Das erfindungsgemäße Verfahren zum seriellen Befüllen einer Vielzahl von eine geometrische Längsachse und einen dazu zentrierten Füllstutzen aufweisenden Druckflaschen mit einem Gas wird im Wesentlichen an liegenden, also horizontal ausgerichteten Druckflaschen durchgeführt. Dazu werden die Druckflaschen parallel zueinander und mit ihren Längsachsen quer zu einer Transportrichtung ausgerichtet auf einem Transportband angeordnet und von diesem in Transportrichtung bewegt, wobei jede Druckflasche einzeln bei Erreichen einer Füllposition von einem Manipulator angehoben, justiert und horizontal in Richtung ihrer Längsachse zu einem Füllkopf bewegt und an diesen angepresst wird, so dass ein Füllvorgang durchgeführt werden kann. Nach Abschluss des Füllvorgangs wird die Druckflasche zurückbewegt, wieder auf dem selben Transportband oder einem anderen Transportbandabgelegt und weitertransportiert. Dieser Vorgang kann weitestgehend automatisiert werden, so dass manuelle Eingriffe höchstens in einer Beladezone am Anfang des Transportbands und in einer Entladezone am Ende des Transportbands erforderlich sind. In diesen Bereichen kann je nach Art der Anlieferung und Auslieferung der Druckflaschen eine Sortierung, Markierung, Prüfung und sonstige logistische Behandlung der Druckflaschen erfolgen.

Bei einer besonders vorteilhaften Ausführungsform der Erfindung rotiert der Manipulator nach dem Anheben jede Druckflasche um ihre Längsachse. Dies führt einerseits zu einer genauen Zentrierung und erlaubt andererseits auch das Ablesen eines auf der Druckflasche angebrachten Barcodes mit einem ortsfesten oder an dem Manipulator angebrachten Lesegerät. Eine zusätzliche Rotation nach dem Füllvorgang vor dem Ablegen auf dem Transportband kann eine gleichmäßige Temperaturverteilung begünstigen

Da diese Vorgänge im Allgemeinen in einer Halle stattfinden, gelegentlich aber auch eine Lagerung außerhalb solcher Hallen erfolgt, kann eine für den Befüllvorgang sinnvolle und reproduzierbare Temperatur, bspw. 15 °C, bei bisherigen Füllvorrichtungen nicht immer sichergestellt werden. In einer besonderen Ausgestaltung der Erfindung ist daher vorgesehen, dass das Transportband mit den Druckflaschen vor Erreichen der Füllposition eine Temperierungsstrecke, insbesondere einen Kühltunntel, durchläuft, in dem die Druckflaschen auf eine gewünschte Fülltemperatur gebracht werden. Im Allgemeinen wird es dabei um eine gewisse Abkühlung der Druckflaschen gehen, da die Umgebungstemperatur in Hallen, die zum Abfüllen genutzt werden, typischerweise höher liegt. In Abhängigkeit von den klimatischen Bedingungen und der Art der Lagerung kann aber durchaus auch eine Erhöhung der Temperatur in der Temperierungsstrecke erforderlich sein. Im Ergebnis verweilen alle zu befüllenden Druckflaschen auf dem Transportband genügend lange in der Temperierungsstrecke, um die gewünschte Fülltemperatur anzunehmen.

Da die Druckflaschen einzeln und nacheinander befüllt werden, ist typischerweise mit einer relativ langsamen schrittweisen Bewegung des Transportbands zu rechnen, wodurch eine genügende Verweildauer in der Temperierungsstrecke automatisch erreicht wird, sofern diese genügend lang ausgelegt ist.

Je nach Art des Transportbands, worunter nicht unbedingt ein Band im eigentlichen Sinne, sondern auch bspw. ein System von Transportrollen verstanden wird, behalten die Druckflaschen ihre Lage beim Transport bei oder drehen sich sogar allein durch den Transport schon im ihre Längsachse. Da für die Temperierungsstrecke und/oder für den Transport nach dem Füllvorgang jedenfalls wünschenswert ist, dass die Druckflaschen rotiert werden, um eine gleichmäßige Temperatur und/oder eine gute Durchmischung ihres Inhalts zu erreichen, wird das Transportsystem bevorzugt so ausgelegt oder mit zusätzlichen Mitteln zum Rotieren der Druckflaschen versehen, dass eine gleichmäßige Temperierung und/oder Durchmischung gewährleistet wird. Dies ist ein besonderer Vorteil der Erfindung, da insbesondere bei dem Befüllen von Druckflaschen mit Gasmischungen das liegende Befüllen und eine anschließende Rotation eine genaue Prüfung des Mischungsverhältnisses durch eine Probeentnahmezulassen.

Erfindungsgemäß kann die Kapazität, das heißt die Zahl der pro Zeiteinheit zu befüllenden Druckflaschen, erhöht werden, indem mehrere Systeme nebeneinander angeordnet werden, wobei entweder mehrere Transportbänder oder ein besonders breites Transportband angewendet werden können. Auch ist nur eine Temperierungsstrecke für mehrere nebeneinander angeordnete Befüllstrecken erforderlich. Insgesamt kann dadurch die Kapazität erhöht werden, ohne dass erhebliche Änderungen an Beladezone, Entladezone und Temperierungsstrecke vorgesehen werden müssen. Auch kann ein übliches Vorrats- und Befüllsystem relativ leicht mit mehreren Füllköpfen ausgestattet werden, ohne dass der Aufwand stark ansteigt.

Eine erfindungsgemäße Vorrichtung zum seriellen Befüllen einer Vielzahl von eine geometrische Längsachse und einen dazu zentrierten Füllstutzen aufweisenden Druckflaschen mit einem Gas weist folgendes auf:
- ein Transportband, auf dem die Druckflaschen liegend und mit ihren Längsachsen quer zu einer Transportrichtung ausgerichtet transportierbar sind,
- einen Manipulator, mit dem jede Druckflasche einzeln bei Erreichen einer Füllposition angehoben, um ihre Längsachse rotiert und in einer vorgebbaren Lage justiert werden kann,
- eine Andrückvorrichtung, mit der die Druckflasche in der vorgebbaren Lage in Richtung ihrer Längsachse und zurück bewegbar und mit ihrem Füllstutzen an einen Füllkopf anpressbar ist und
- einen Füllkopf zur Befüllung der Druckflasche mit einem Gas oder Gasgemisch.

Mit einer solchen Vorrichtung lässt sich das oben beschriebene Verfahren durchführen. Da die Druckflaschen, um die es bei der vorliegenden Erfindung geht, ein verhältnismäßige geringes Gewicht aufweisen, müssen an den Manipulator und die Andrückvorrichtung keine besonderen Anforderungen bezüglich ihrer Struktur und mechanischen Eigenschaften gestellt werden und auch die Halterung für den Füllkopf ist mechanisch einfach zu verwirklichen.

Bevorzugt weist die Vorrichtung um das Transportband herum eine Temperierungsstrecke, insbesondere einen Kühltunnel auf, die von dem Transportband und den Druckflaschen vor Erreichen der Füllposition durchlaufen wird. Sofern es um eine Kühlung geht, können hier Verdampfer von flüssigem Stickstoff und ähnliche Mittel zur wirksamen Kühlung eingesetzt werden.

Sofern das Transportband nicht konstruktionsbedingt die Druckflaschen beim Transport rotiert, so sollen vorzugsweise Mittel zum Rotieren der Druckflaschen um ihre Längsachse vorhanden sein. Dadurch werden eine gleichmäßige Temperierung der Druckflaschen vor dem Befüllen und/oder eine gute Durchmischung und gleichmäßige Temperierung nach dem Befüllen erreicht.

In einer besonderen Ausgestaltung kann das Transportband so breit sein oder aus einer Mehrzahl von Transportbändern so ausgebildet sein, dass zwei oder mehr Druckflaschen in ihrer Längsrichtung etwa fluchtend hintereinander angeordnet quer zur Transportrichtung aufgenommen und transportiert werden können, insbesondere durch eine gemeinsame Temperierungsstrecke, wobei an der Füllposition eine entsprechende Anzahl von Füllköpfen vorhanden ist, zu denen die zwei oder mehr Druckflaschen angehoben und geführt werden können. Wie oben bereits beschrieben, führt dies zu einer Erhöhung der Kapazität der Anlage mit relativ geringem Aufwand.

Dadurch, dass erfindungsgemäß die Druckflaschen zum Füllkopf bewegt werden, kann jeder Füllkopf ortsfest angeordnet sein und über Ventile mit mindestens einem Vorratsbehälter für das mindestens eine zu füllende Gas verbunden sein. Vorzugsweise ist der Füllkopf mit leicht auswechselbaren Verschleißteilen ausgerüstet und erlaubt das Anbringen verschiedener Adapter für Druckflaschen unterschiedlicher Fülllung oder unterschiedlichen Drucks.

In einer bevorzugten Ausführungsform der Erfindung weist der Füllkopf mindestens einen Sensoranschluss auf, insbesondere für Temperatur und/oder Druck in Leitungen des Füllkopfs. Dies erlaubt eine gute Kontrolle und Regelung des Füllvorgangs, indem Druck und/oder Temperatur bzw. deren Verläufe während des Füllvorgangs gemessen werden.

Für eine automatisierte Befüllung und eine ökonomischen Einsatz von Druckflaschen ist es besonders vorteilhaft, wenn jeder Füllstutzen (meist in einer für andere Zwecke vorhandenen Armatur eingebaut) der Druckflaschen ein aktives Rückschlagventil aufweist. Zunächst wird so ein Rückschlagventil beim Anpressen gegen den Füllkopf durch einen geeigneten Aktivierungsstift geöffnet, so dass der Füllvorgang durchgeführt werden kann. Nach dem Füllvorgang wird der Aktivierungsstift zurückgezogen, was z. B. pneumatisch erfolgen kann. Das aktive Rückschlagventil wird dann aufgrund einer Federbelastung und des Innendruckes in der Druckflasche sofort geschlossen. Die Druckflasche kann dann zurückgezogen und wieder auf dem Transportband abgelegt werden.

Bei einer weiteren bevorzugten Ausführungsform der Erfindung weist der Manipulator mindestens einen Temperatursensor auf, vorzugsweise einen Infrarotsensor, mit dem vor, während und/oder nach dem Füllvorgang die Temperatur und/oder der Temperaturverlauf der Druckflasche messbar sind. Da die Außentemperatur der Druckflasche relativ schnell der Temperatur im Inneren folgt, lassen sich der Füllvorgang und die damit einhergehenden Temperaturänderungen auf diese Weise berührungslos verfolgen, was eine gute Kontrolle des Füllvorgangs erlaubt. Auch Gasverluste nach dem Füllvorgang können auf diese Weise detektiert werden, weil ein Druckabfall auch eine Absenkung der Flaschentemperatur bewirkt.

Die vorliegende Patentanmeldung ist besonders auf die Abfüllung von mindestens einem Gas oder einer Gasmischung aus der Gruppe Sauerstoff, Argon, Stickstoff, Helium, Wasserstoff und Argongemische, wie sie insbesondere zum Schweißen benutzt werden, anwendbar. Bei geeigneten Sicherheitseinrichtungen, bei denen insbesondere die Gasarterkennung durch Barcodes an den Druckflaschen erfolgt, kann ein Füllkopf für verschiedene Gasarten benutzt werden, indem Ventile zu unterschiedlichen Vorratsbehältern freigeschaltet werden.

Im Folgenden wird die Erfindung anhand von Ausführungsbeispielen, auf die die Erfindung jedoch nicht beschränkt ist, näher erläutert. Es zeigen:
- Fig. 1:: ein schematisch dargestelltes Ausführungsbeispiel der Erfindung in Transportrichtung der Druckflaschen gesehen,
- Fig. 2:: eine schematische Seitenansicht der Fig. 1,
- Fig. 3:: einen erfindungsgemäßen Füllkopf, und
- Fig. 4:: eine Ansicht von oben auf ein erfindungsgemäßes System mit Kühltunnel, durch den drei erfindungsgemäße Transportbänder verlaufen.

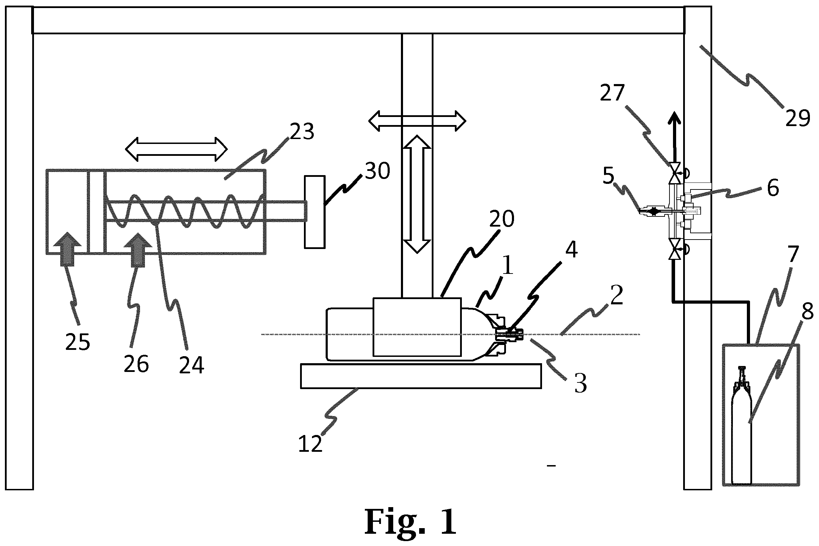

Fig. 1 zeigt in schematischer Darstellung die Konstellation einer erfindungsgemäßen Vorrichtung in der Ebene einer Füllposition 17 für Druckflaschen 1. Eine Druckflasche 1 mit einer geometrischen Längsachse 2 und einem Füllstutzen 3, der über ein aktives Rückschlagventil 4 mit dem Innenvolumen der Druckflasche 1 kommuniziert, liegt dabei auf einem Transportband 12. Die Druckflasche 1 kann von einem Manipulator 20 von oben ergriffen und bei weiterhin horizontal liegender Längsachse 2 angehoben werden. Pfeile deuten die möglichen Bewegungen des Manipulators 20 an. Bevorzugt kann der Manipulator 20 die Druckflasche 1 auch um ihre Längsachse 2 rotieren, was zur Zentrierung der Längsachse hilfreich ist und ein gleichzeitiges Ablesen eines Barcodes an der Druckflasche mit einem nicht dargestellten Lesegerät erlaubt. Insbesondere kann die Druckflasche 1 soweit angehoben werden, dass ihre Längsachse 2 mit einem Füllkopf 5 fluchtet. In dieser Lage kann die Druckflasche 1 von einer Andrückvorrichtung 23, bspw. mittels eines durch eine Druckfeder 24 federbelasteten Stempels 30, gegen den Füllkopf 5 gedrückt werden. Der Stempel 30 und somit auch die Druckflasche 1 werden mit Federkraft gegen den Füllkopf 5 gepresst. Dies dient der Sicherheit für den Fall, dass während des Füllvorganges die Steuerluft für die Andrückvorrichtung 23 ausfallen würde. Die Anpresskraft bleibt durch die Druckfeder 24 in jedem Fall erhalten. Mit der Druckluft wird gegen die Federkraft der Stempel und somit auch die Flasche wieder zurückgezogen. Dazu weist die Andrückvorrichtung 23 eine Vorschubeinrichtung 25 auf, die bspw. mittels Pressluft betätigt werden kann. Eine Druckfeder 24 dämpft die Vorschubeinrichtung 25 und unterstützt eine Rückzieheinrichtung 24, die ebenfalls durch Pressluft betätigt werden kann. Damit die Druckflasche 1 zurückgezogen werden kann, muss der Stempel 30 so ausgestaltet sein, dass er die Druckflasche entweder an ihrem hinteren Ende greifen oder aber bspw. magnetisch anziehen kann. Die Bewegungsmöglichkeiten der Andrückvorrichtung 23 sind ebenfalls durch einen Pfeil angedeutet. Wird die Druckflasche 1 gegen den Füllkopf 5 gepresst, so wird, wie bei anderen Fülleinrichtungen auch, das Rückschlagventil 4 mittels eines vorzugsweise pneumatisch betätigbaren Aktivierungsstifts 9 geöffnet, so dass alle für den Füllvorgang erforderlichen Mittel wie Evakuieren, Spülen, neu Befüllen etc. durchgeführt werden können. Dazu ist der Füllkopf 5 über Leitungen 28 mit einem Vorrats- und Dosiersystem 7 verbunden, welches einen oder mehrere Vorratsbehälter 8 für die zu füllenden Gase enthält. Der Füllkopf 5 weist außerdem die erforderlichen Ventile 27 und bei Bedarf Sensoranschlüsse 6 für Temperatur- und/oder Drucksensoren auf. Füllkopf 5, Manipulator 20 und Andrückvorrichtung 23 sind an einem stabilen Halterahmen 29 befestigt. Das dargestellte System kann in der Füllposition 17 weitgehend automatisiert betrieben werden, so dass bei dem eigentlichen Füllvorgang keine manuellen Eingriffe erforderlich sind. Übliche Sicherheitssysteme, bei denen bspw. die Druckflaschen 1 mittels maschinenlesbarer Codierungen, bspw. Bar-Codes, gekennzeichnet sind, können auch hier angewendet werden, um sicherzustellen, dass die Druckflaschen 1 mit dem jeweils gewünschten Gas oder Gasgemisch und unter dem gewünschten Druck befüllt werden.

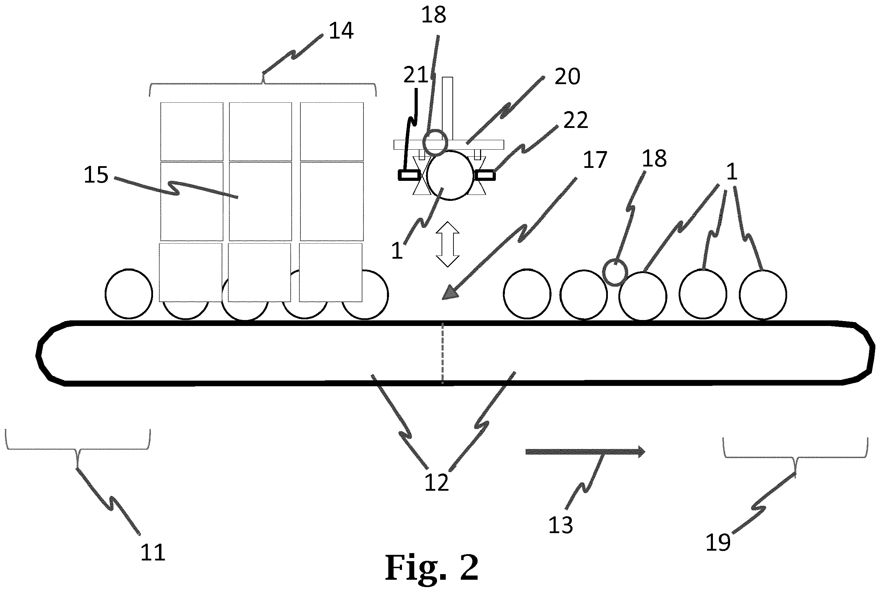

Fig. 2 zeigt eine Seitenansicht einer erfindungsgemäßen Vorrichtung mit einer an der Füllposition 17 bereits angehobenen Druckflasche 1. Wie erkennbar ist, ist es nicht zwingend erforderlich, aber durchaus möglich und wünschenswert, dass die Druckflaschen 1 auf nur einem einzigen Transportband 12 bewegt werden. Wie in diesem Ausführungsbeispiel durch eine gestrichelte Linie angedeutet, kann das Transportband auch aus mehreren Teilen bestehen. Es ist durchaus möglich, dass der Manipulator 20 die Druckflasche 1 von einem ersten Transportband 12 anhebt und nach dem Füllvorgang auf einem zweiten Transportband 12 absetzt, welches auch nicht notwendigerweise exakt in der gleichen Richtung verlaufen muss wie das erste Transportband 12, sofern der Manipulator 20 nicht nur translatorische Bewegungen, sondern auch Drehungen durchführen kann. Für die weitere Beschreibung der Erfindung spielt es aber keine Rolle, ob ein oder mehrere Transportbänder 12 eingesetzt werden. Wichtig ist auch, dass die Transportbänder 12 nicht notwendigerweise Bänder im eigentlichen Sinne sein müssen, sondern aus Gliedern oder anderen in der Fördertechnik bekannten Bewegungssystemen bestehen können. Manche dieser bekannten Fördersysteme rotieren bereits durch den Transportvorgang zylindrische Körper wie Druckflaschen 1, was für die vorliegende Erfindung durchaus erwünscht ist, um eine Vergleichmäßigung der Temperatur und eventuell eine Durchmischung des Inhalts zu erreichen. Falls das eingesetzte Transportsystem 12 selbst keine genügende Rotation der Druckflaschen 1 bewirkt, kann an einer oder mehreren Stellen ein Rotationsmechanismus 18 vorgesehen werden. Insbesondere kann der Manipulator 20 mit einem Rotationsmechanismus ausgestattet sein. Wie in Fig. 2 schematisch angedeutet ist, liegt an einem Ende des Transportbands 12 eine Beladezone 11, in der, ggf. mit manueller Unterstützung, zu befüllende Druckflaschen 1 hintereinander auf das Transportband gelegt werden, und zwar so, dass ihre Längsachsen 2 jeweils horizontal und quer zu einer Bewegungsrichtung 13 des Transportbands 12 verlaufen. Anschließend durchlaufen die Druckflaschen 1 eine Temperierungsstecke 14, im vorliegenden Ausführungsbeispiel, einen schematisch angedeuteten Kühltunnel 15, wobei sie auf eine gewünschte Temperatur gebracht werden, die höher oder niedriger als die Eingangstemperatur der Druckflaschen 1 sein kann. Im Allgemeinen wird es sich um eine Kühlung auf bspw. ca. 15 °C handeln. Hinter der Temperierungsstrecke 14 gelangt bei weiterem Vorschub nach und nach jede Druckflasche 1 in die Position 17, wo sie von dem Manipulator 20 ergriffen und für den weiteren Füllvorgang an einen hier nicht dargestellten Füllkopf 5 gedrückt werden kann. Der Manipulator 20 weist im vorliegenden Ausführungsbeispiel zur Überwachung des gesamten Füllvorgangs einen ersten 21 und einen zweiten 22 Temperatursensor auf, die den Temperaturverlauf in der Druckflasche 1 während und nach dem Füllvorgang überwachen. Es kann sich bspw. um Infrarotsensoren handeln, die relativ genau den Temperaturverlauf an der Oberfläche der Druckflasche 1 aufzeichnen und damit Unregelmäßigkeiten beim Befüllen oder Leckagen nach dem Befüllen erkennbar machen können.

Nach dem Füllvorgang legt der Manipulator 20 die Druckflasche 1 wieder auf demselben oder einem anderen Transportband 12 ab, von wo die Druckflaschen 1 zu einer Entladezone 19 geführt werden, in der sie, ggf. mit manueller Unterstützung, vom Transportband 12 genommen und abtransportiert und gelagert werden.

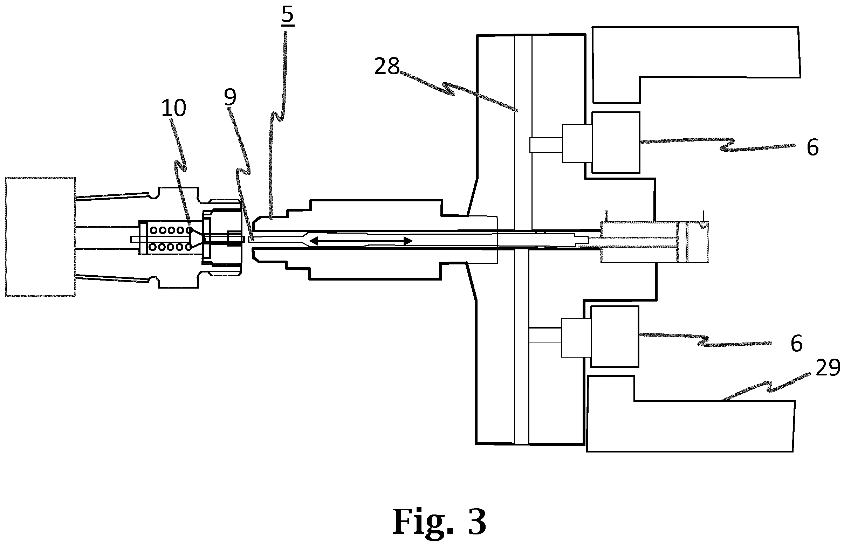

Fig. 3 zeigt in vergrößerter Darstellung die wesentlichen Teile eines Füllkopfs, der bei der vorliegenden Erfindung ortsfest an einem Halterahmen 29 befestigt ist. Der Füllkopf unterscheidet sich hauptsächlich durch seine horizontale Ausrichtung von an sich bekannten Füllköpfen und enthält einen Aktivierungsstift 9 zur Betätigung von Rückschlagventilen in Druckflaschen. Für unterschiedliche Druckflaschen kann der Füllkopf 5 mit unterschiedlichen Adaptern 10 ausgestattet sein, wobei auch der Aktivierungsstift 9, der ohnehin als Verschleißteil zu betrachten ist, auswechselbar gestaltet sein kann. Der Füllkopf weist verschiedene Leitungen 28 zur Verbindung mit einem Vorrats- und Dosiersystem 7 auf und mindestens einen Sensoranschluss 6, im vorliegenden Ausführungsbeispiel zwei, für den Anschluss von Sensoren zur Messung von Druck und/oder Temperatur des Füllgases.

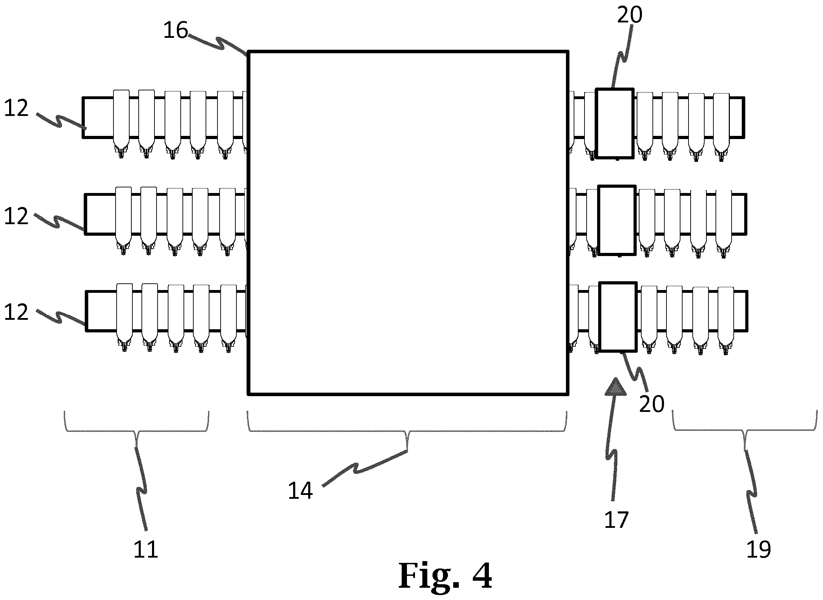

Schließlich zeigt Fig. 4 in einer schematischen Ansicht von oben, wie mehrere Transportbänder 12 parallel nebeneinander angeordnet werden können und gemeinsam eine Temperierungsstrecke 14, bspw. einen Kühltunnel 16, durchlaufen. Hinter dem Kühltunnel 16 befindet sich für alle Druckflaschen 1 die Füllposition, wobei in diesem Ausführungsbeispiel drei Manipulatoren 20 zum Anheben der Druckflaschen 1 vorhanden sind. Eine solche Anordnung hat den Vorteil, die Kapazität zum Abfüllen von Druckflaschen 1 zu verdreifachen, ohne dass dreifacher Aufwand in der Beladezone 11, im Kühltunnel 14, bei dem Vorrats- und Dosiersystem an der Füllposition 17 und in der Entladezone 19 erforderlich sind. In diesen Bereichen können für alle Transportbänder die selben Systeme benutzt werden.

Die vorliegende Erfindung eignet sich insbesondere für Druckflaschen mit Volumina bis 20 1 und für das massenhafte Abfüllen solcher Druckflaschen mit Gasen wie Sauerstoff, Stickstoff, Helium oder Argon bzw. Argongemischen. Druckflaschen, die mit dem erfindungsgemäßen System besonders gut befüllt werden können, sind in großer Zahl unter dem Handelsnamen ALbee in Umlauf und werden an vielen Stellen weltweit eingesetzt. Die Erfindung ermöglicht eine automatisierte, sichere und logistisch einfache und schnelle Befüllung mit geringen Durchlaufzeiten für den Füllvorgang.

### Bezugszeichenliste

- 1: Druckflasche
- 2: Geometrische Längsachse
- 3: Füllstutzen
- 4: Aktives Rückschlagventil
- 5: Füllkopf
- 6: Sensoranschluss
- 7: Vorrats- und Dosiersystem
- 8: Vorratsbehälter
- 9: Aktivierungsstift
- 10: Adapter
- 11: Beladezone
- 12: Transportband
- 13: Transportrichtung
- 14: Temperierungsstrecke
- 15: Temperierungseinrichtung
- 16: Kühltunnel
- 17: Füllposition
- 18: Rotationsmechanismus
- 19: Entladezone
- 20: Manipulator
- 21: Erster Temperatursensor
- 22: Zweiter Temperatursensor
- 23: Andrückvorrichtung
- 24: Druckfeder
- 25: Vorschubeinrichtung
- 26: Rückzieheinrichtung
- 27: Ventil
- 28: Leitung
- 29: Halterahmen
- 30: Stempel

## Patentansprüche

1. Verfahren zum seriellen Befüllen einer Vielzahl von eine geometrische Längsachse (2) und einen dazu zentrierten Füllstutzen (3) aufweisenden Druckflaschen (1) mit einem Gas, wobei die Druckflaschen (1) parallel zueinander und mit ihren Längsachsen (2) quer zu einer Transportrichtung (13) ausgerichtet auf einem Transportband (12) angeordnet und von diesem in Transportrichtung (13) bewegt werden, wobei jede Druckflasche (1) einzeln bei Erreichen einer Füllposition (17) von einem Manipulator (20) angehoben, justiert und in Richtung ihrer Längsachse (2) zu einem Füllkopf (5) bewegt und an diesen angepresst wird, so dass ein Füllvorgang durchgeführt werden kann, und wobei nach Abschluss des Füllvorganges die Druckflasche (2) zurückbewegt, wieder auf dem Transportband (12) abgelegt und weiter transportiert wird, **dadurch gekennzeichnet, daß** jede Druckflasche horizontal zu dem Füllkopf bewegt wird.

2. Verfahren nach Anspruch 1, wobei der Manipulator (20) jede Druckflasche (1) vor dem Andrücken an den Füllkopf (5) um ihre Längsachse (2) rotiert.

3. Verfahren nach Anspruch 1 oder 2, wobei das Transportband (12) mit den Druckflaschen (1) vor Erreichen der Füllposition (17) eine Temperierungsstrecke (14) durchläuft, in der die Druckflaschen (1)auf eine gewünschte Fülltemperatur gebracht werden.

4. Verfahren nach Anspruch 1, 2 oder 3, wobei das Beladen und/oder Entladen des Transportbandes (12) manuell oder mit manueller Unterstützung erfolgt, der Füllvorgang jedoch vollautomatisch ohne manuelle Eingriffe.

5. Verfahren nach einem der vorhergehenden Ansprüche, wobei die Druckflaschen (1) vor und/oder nach dem Füllvorgang auf dem Transportband (12) um ihre Längsachse (2) rotiert werden, um eine gleichmäßige Temperatur und/oder eine gute Durchmischung ihres Inhaltes zu erreichen.

6. Verfahren nach einem der vorhergehenden Ansprüche, wobei jeweils zwei oder mehr Druckflaschen (1) mit ihren Längsachsen (2) etwa fluchtend quer auf mindestens einem Transportband (12) angeordnet werden, so dass zwei oder mehr parallel laufende Reihen von gleichen oder unterschiedlichen Druckflaschen (1) gebildet werden, von denen eine entsprechende Anzahl gleichzeitig von mindestens einem Manipulator (20) angehoben und zu einer entsprechenden Anzahl von gleichen oder unterschiedlichen Füllköpfen (5) geführt werden kann.

7. Vorrichtung zum seriellen Befüllen einer Vielzahl von eine geometrische Längsachse (2) und einen dazu zentrierten Füllstutzen (3) aufweisenden Druckflaschen (1) mit einem Gas aufweisend:
- ein Transportband (12), auf dem die Druckflaschen (1) liegend und mit ihren Längsachsen (2) quer zu einer Transportrichtung (13) ausgerichtet transportierbar sind,
- einen Manipulator (20), mit dem jede Druckflasche (1) einzeln bei Erreichen einer Füllposition (17) angehoben, um ihre Längsachse (2) rotiert und in einer vorgebbaren Lage justiert werden kann,
- eine Andrückvorrichtung (23), mit der die Druckflasche (1) in der vorgebbaren Lage in Richtung ihrer Längsachse (2) und zurück bewegbar und mit ihrem Füllstutzen an einen Füllkopf (5) anpressbar ist und
- einen Füllkopf (5) zur Befüllung der Druckflasche (1) mit einem Gas oder Gasgemisch.

8. Vorrichtung nach Anspruch 7, wobei eine Temperierungsstrecke (14), insbesondere ein Kühltunnel (16), vorhanden ist, die von dem Transportband (12) und den Druckflaschen (1) vor Erreichen der Füllposition (17) durchlaufen wird.

9. Vorrichtung nach Anspruch 7 oder 8, wobei Mittel (18) zum Rotieren der Druckflaschen (1) um ihre Längsachse (2) auf dem Transportband (12) vorhanden sind.

10. Vorrichtung nach einem der Ansprüche 7 bis 9, wobei das Transportband (12) so breit ist oder eine Mehrzahl von Transportbändern (12) vorhanden ist, dass zwei oder mehr Druckflaschen (1) in ihrer Längsrichtung (2) etwa fluchtend hintereinander angeordnet quer zur Transportrichtung (13) aufgenommen und transportiert werden können, insbesondere durch eine gemeinsame Temperierungsstrecke (14), wobei an der Füllposition (17) eine entsprechende Anzahl von Füllköpfen (5) vorhanden ist, zu denen die zwei oder mehr Druckflaschen (1) angehoben und geführt werden können.

11. Vorrichtung nach einem der Ansprüche 7 bis 10, wobei jeder Füllkopf (5) ortsfest angeordnet ist und über Ventile (27) mit mindestens einem Vorratsbehälter (8) für das mindestens eine zu füllende Gas verbunden ist, vorzugsweise mit leicht auswechselbaren Verschleißteilen oder Adaptern (10) versehen ist.

12. Vorrichtung nach einem der Ansprüche 7 bis 11, wobei der Füllkopf (5) mindestens einen Sensoranschluss (6), insbesondere für Temperatur und/oder Druck in Leitungen (28) des Füllkopfes (5), aufweist.

13. Vorrichtung nach einem der Ansprüche 7 bis 12, wobei jeder Füllstutzen (3) ein aktives Rückschlagventil (4) aufweist.

14. Vorrichtung nach einem der Ansprüche 7 bis 13, wobei der Manipulator (20) mindestens einen Temperatursensor (21, 22), vorzugsweise einen Infrarotsensor, aufweist, mit dem vor, während und/oder nach dem Füllvorgang die Temperatur und/oder der Temperaturverlauf der Druckflasche (1) messbar sind.

15. Vorrichtung nach einem der Ansprüche 7 bis 14 zur Abfüllung von mindestens einem Gas oder Gemischen aus der Gruppe Sauerstoff, Argon, Stickstoff, Helium, Wasserstoff.

## Claims

1. Method for the serial filling, with a gas, of a plurality of pressure cylinders (1) which comprise a geometrical longitudinal axis (2) and a filling nozzle (3) centered thereon, the pressure cylinders (1) being parallel to one another and being arranged on a conveyor belt (12) so as to have their longitudinal axes (2) aligned transversely to a transport direction (13) and being moved by said conveyor belt in the transport direction (13), each pressure cylinder (1), upon reaching a filling position (17), being individually lifted, adjusted and moved in the direction of its longitudinal axis (2) to a filling head (5) by a manipulator (20), and pressed against said filling head such that a filling process can be carried out, and, after the filling process has been completed, the pressure cylinder (2) being moved back, placed back on the conveyor belt (12) and transported onward, **characterized in that** each pressure cylinder is moved horizontally to the filling head.

2. Method according to claim 1, wherein the manipulator (20) rotates each pressure cylinder (1) about its longitudinal axis (2) before said cylinder is pressed against the filling head (5).

3. Method according to either claim 1 or claim 2, wherein the conveyor belt (12), together with the pressure cylinders (1), passes through a temperature control section (14) before reaching the filling position (17), in which section the pressure cylinders (1) are brought to a desired filling temperature.

4. Method according to claim 1, claim 2 or claim 3, wherein the loading or unloading of the conveyor belt (12) is carried out manually or with manual support, but the filling process is carried out fully automatically without manual intervention.

5. Method according to any of the preceding claims, wherein the pressure cylinders (1) are rotated about their longitudinal axis (2) on the conveyor belt (12) before and/or after the filling process in order to achieve a uniform temperature and/or thorough mixing of their contents.

6. Method according to any of the preceding claims, wherein in each case two or more pressure cylinders (1) are arranged transversely on at least one conveyor belt (12) so as to have their longitudinal axes (2) approximately in alignment, such that two or more parallel rows of the same or different pressure cylinders (1) are formed, of which a corresponding number can be simultaneously lifted and guided to a corresponding number of the same or different filling heads (5) by at least one manipulator (20).

7. Device for the serial filling, with a gas, of a plurality of pressure cylinders (1) which comprise a geometric longitudinal axis (2) and a filling nozzle (3) centered thereon, comprising:
- a conveyor belt (12) on which the pressure cylinders (1) can be transported so as to be lying down and so as to have their longitudinal axes (2) aligned transversely to a transport direction (13),
- a manipulator (20) by means of which each pressure cylinder (1), upon reaching a filling position (17), can be individually lifted, rotated about its longitudinal axis (2) and adjusted in a predeterminable position,
- a pressing device (23) by means of which the pressure cylinder (1) in the predeterminable position can be moved in the direction of its longitudinal axis (2) and back again, and can be pressed so as to have its filling nozzle against a filling head (5), and
- a filling head (5) for filling the pressure cylinder (1) with a gas or gas mixture.

8. Device according to claim 7, wherein a temperature control section (14), in particular a cooling tunnel (16), is provided, through which the conveyor belt (12) and the pressure cylinders (1) pass before reaching the filling position (17).

9. Device according to either claim 7 or claim 8, wherein means (18) for rotating the pressure cylinders (1) about their longitudinal axis (2) are provided on the conveyor belt (12).

10. Device according to any of claims 7 to 9, wherein the conveyor belt (12) is wide enough or a plurality of conveyor belts (12) is provided such that two or more pressure cylinders (1) can be picked up and transported transversely to the transport direction (13), in particular through a common temperature control section (14), so as to be arranged approximately in alignment one behind the other in their longitudinal direction (2), wherein a corresponding number of filling heads (5) is provided at the filling position (17), to which heads the two or more pressure cylinders (1) can be lifted and guided.

11. Device according to any of claims 7 to 10, wherein each filling head (5) is arranged in a stationary manner and is connected via valves (27) to at least one storage container (8) for the at least one gas to be filled, preferably is provided with easily replaceable wearing parts or adapters (10).

12. Device according to any of claims 7 to 11, wherein the filling head (5) comprises at least one sensor connection (6), in particular for temperature and/or pressure in lines (28) of the filling head (5).

13. Device according to any of claims 7 to 12, wherein each filling nozzle (3) has an active check valve (4).

14. Device according to any of claims 7 to 13, wherein the manipulator (20) comprises at least one temperature sensor (21, 22), preferably an infrared sensor, by means of which the temperature and/or the temperature profile of the pressure cylinder (1) can be measured before, during and/or after the filling process.

15. Device according to any of claims 7 to 14 for filling at least one gas or mixtures from the group consisting of oxygen, argon, nitrogen, helium and hydrogen.

## Revendications

1. Procédé permettant le remplissage en série, avec un gaz, d'une pluralité de bouteilles sous pression (1) présentant un axe longitudinal géométrique (2) et une tubulure de remplissage (3) centrée par rapport à ce dernier, les bouteilles sous pression (1) étant parallèles les unes aux autres et étant disposées sur une bande transporteuse (12) de façon que leurs axes longitudinaux (2) soient orientés transversalement à une direction de transport (13), et étant déplacées par la bande transporteuse dans la direction de transport (13), chaque bouteille sous pression (1), lorsqu'elle atteint une position de remplissage (17), étant soulevée, ajustée et déplacée vers une tête de remplissage (5) dans la direction de son axe longitudinal (2) individuellement par un manipulateur (20), et étant pressée contre la tête de remplissage, de telle sorte qu'un processus de remplissage peut être effectué, et, une fois le processus de remplissage terminé, la bouteille sous pression (2) étant déplacée vers l'arrière, replacée sur la bande transporteuse (12) et transportée plus loin, **caractérisé en ce que** chaque bouteille sous pression est déplacée horizontalement vers la tête de remplissage.

2. Procédé selon la revendication 1, selon lequel le manipulateur (20) fait tourner chaque bouteille sous pression (1) autour de son axe longitudinal (2) avant qu'elle ne soit pressée contre la tête de remplissage (5).

3. Procédé selon la revendication 1 ou 2, selon lequel la bande transporteuse (12) comportant les bouteilles sous pression (1) passe à travers une section de régulation de température (14) avant d'atteindre la position de remplissage (17), les bouteilles sous pression (1) étant amenées à une température de remplissage souhaitée dans la section de régulation de température.

4. Procédé selon la revendication 1, 2 ou 3, selon lequel le chargement et/ou le déchargement de la bande transporteuse (12) sont effectués manuellement ou avec une assistance manuelle, tandis que le processus de remplissage est effectué de manière entièrement automatique sans intervention manuelle.

5. Procédé selon l'une des revendications précédentes, selon lequel les bouteilles sous pression (1) sont mises en rotation autour de leur axe longitudinal (2) sur la bande transporteuse (12) avant et/ou après le processus de remplissage afin d'obtenir une température uniforme et/ou un mélange satisfaisant de leur contenu.

6. Procédé selon l'une des revendications précédentes, selon lequel les axes longitudinaux (2) de respectivement deux ou plus bouteilles sous pression (1) sont disposés sur au moins une bande transporteuse (12) en étant approximativement alignés transversalement, de manière à former deux ou plus rangées parallèles de bouteilles sous pression (1) identiques ou différentes, un nombre correspondant de celles-ci pouvant être simultanément soulevé par au moins un manipulateur (20) et guidé vers un nombre correspondant de têtes de remplissage (5) identiques ou différentes.

7. Dispositif permettant le remplissage en série, avec un gaz, d'une pluralité de bouteilles sous pression (1) présentant un axe longitudinal géométrique (2) et une tubulure de remplissage (3) centrée par rapport à ce dernier, présentant :
- une bande transporteuse (12) sur laquelle les bouteilles sous pression (1) peuvent être transportées en étant couchées et de façon que leurs axes longitudinaux (2) soient orientés transversalement à une direction de transport (13),
- un manipulateur (20) permettant de soulever chaque bouteille sous pression (1) individuellement lorsqu'elle atteint une position de remplissage (17), de la faire tourner autour de son axe longitudinal (2) et de l'ajuster dans une position pouvant être prédéfinie,
- un dispositif de pressage (23) permettant de déplacer la bouteille sous pression (1) dans la position pouvant être prédéfinie dans la direction de son axe longitudinal (2) et vers l'arrière, et de presser sa tubulure de remplissage contre une tête de remplissage (5), et
- une tête de remplissage (5) destinée à remplir la bouteille sous pression (1) avec un gaz ou un mélange de gaz.

8. Dispositif selon la revendication 7, dans lequel une section de régulation de température (14), en particulier un tunnel de refroidissement (16), est prévu(e), à travers lequel/laquelle passent la bande transporteuse (12) et les bouteilles sous pression (1) avant d'atteindre la position de remplissage (17).

9. Dispositif selon la revendication 7 ou 8, dans lequel des moyens (18) destinés à faire tourner les bouteilles sous pression (1) autour de leur axe longitudinal (2) sont prévus sur la bande transporteuse (12).

10. Dispositif selon l'une des revendications 7 à 9, dans lequel la bande transporteuse (12) est d'une largeur suffisante ou une pluralité de bandes transporteuses (12) sont prévues de telle sorte que deux ou plus bouteilles sous pression (1) peuvent être reçues et transportées transversalement à la direction de transport (13) de façon à être disposées en étant approximativement alignées les unes derrière les autres dans leur direction longitudinale (2), en particulier à travers une section commune de régulation de température (14), un nombre correspondant de têtes de remplissage (5), vers lesquelles peuvent être soulevées et guidées les deux ou plus bouteilles sous pression (1), étant prévu à la position de remplissage (17).

11. Dispositif selon l'une des revendications 7 à 10, dans lequel chaque tête de remplissage (5) est disposée de manière fixe et est reliée, par l'intermédiaire de clapets (27), à au moins un récipient de stockage (8) pour l'au moins un gaz à remplir, de préférence est pourvue de pièces d'usure ou d'adaptateurs (10) facilement remplaçables.

12. Dispositif selon l'une des revendications 7 à 11, dans lequel la tête de remplissage (5) présente au moins une connexion de capteur (6), en particulier pour la température et/ou la pression dans les conduites (28) de la tête de remplissage (5).

13. Dispositif selon l'une des revendications 7 à 12, dans lequel chaque tubulure de remplissage (3) présente un clapet anti-retour actif (4).

14. Dispositif selon l'une des revendications 7 à 13, dans lequel le manipulateur (20) présente au moins un capteur de température (21, 22), de préférence un capteur infrarouge, lequel permet de mesurer la température et/ou le profil de température de la bouteille sous pression, avant, pendant et/ou après le processus de remplissage (1).

15. Dispositif selon l'une des revendications 7 à 14 permettant le remplissage d'au moins un gaz ou de mélanges du groupe constitué par l'oxygène, l'argon, l'azote, l'hélium et l'hydrogène.
